# EUROPEAN PATENT APPLICATION

(11) **EP 3 236 050 A1**
(43) Date of publication of application: **25.10.2017**
(21) Application number: 17166892.4
(22) Date of filing: 18.04.2017
(51) Int. Cl.: F02C 7/236, F02C 9/30

(54) **ENGINE FUEL CONTROL SYSTEM**

(30) Priority: 20.04.2016 GB 201606896
(71) Applicant: Rolls-Royce PLC, London SW1E 6AT (GB)
(72) Inventor: BICKLEY, Daniel, Derby, Derbyshire DE24 8BJ (GB)
(74) Representative: Gill, Stephen Charles

(57) **Abstract**

An engine fuel control system is provided. The system includes a fuel metering valve operable to control the flow of fuel between a supply line and a delivery line which delivers fuel to burners of the engine. The system further includes a fixed displacement main pump which receives fuel from a low pressure source and delivers the fuel at a first high pressure to the supply line. The system further includes a variable displacement augmenter pump which receives fuel from the low pressure source and delivers the fuel at a second high pressure to one or more fuel-pressure operated auxiliary engine devices. The augmenter pump has a servo-controller to vary its pump flow rate such that the fuel delivery flow rate of the augmenter pump is varied to compensate for fuel flow demands imposed by the auxiliary engine devices. The system further includes an augmentation valve which is actuated at selected engine operating conditions to open a flow path through the augmentation valve which diverts fuel delivered by the augmenter pump away from the auxiliary engine devices to the supply line to augment the fuel delivered thereto by the main pump. The augmentation valve is actuated at other engine operating conditions to shut the flow path. The system further includes a pressure drop control valve which senses a pressure differential between the second high pressure and a reference pressure. The pressure drop control valve is arranged to control the servo-controller such that the pump flow rate of the augmenter pump is varied to maintain the pressure differential at a predetermined level. The pressure drop control valve is configured to spill, at the other engine operating conditions, a portion of the fuel delivered by the augmenter pump away from the auxiliary engine devices to the supply line to augment the fuel delivered thereto by the main pump. The system further includes an electrically operated control valve which is operable to actuate the augmentation valve.

## Description

### Field of the Invention

The present invention relates to an engine fuel control system and in particular to a fuel control system for use in controlling the supply of fuel to a gas turbine engine.

### Background

Fuel control systems, of the type described in US 7137242, are used in controlling the supply of fuel to an aircraft engine. Such systems have a hydro-mechanical unit (HMU) which contains a metering valve and which receives a supply of fuel at high pressure (HP) from a gear pump driven from, and thus operated at a speed related to, the main shaft of the associated gas turbine engine. The inlet of the gear pump is supplied from a fuel reservoir by means of a boost pump or lift pump, the pressure at the inlet of the gear pump being defined as low pressure (LP), which in practice may be above atmospheric pressure but substantially below HP. The supply line from the outlet of the gear pump contains a fuel filter and enters the HMU to provide an HP supply to the inlet gallery of the metering valve and thence to a variable metering orifice of the valve. As is conventional in metering valves, a spool of the valve is moved within the housing of the valve to control the degree of opening of the metering orifice of the valve and thus the metering of fuel flow through the valve. A delivery line from the metering valve conducts metered fuel through a pressure raising and shut-off valve (PRSOV) of the HMU. The PRSOV serves, in use, to maintain a minimum fuel pump pressure rise (HP-LP), so as to ensure that internal HMU valves and any fuel-pressure operated auxiliary devices (such as variable stator vane actuators, variable inlet guide vane actuators and bleed valve actuators) arranged to receive fuel under pressure from the fuel control system can operate correctly. An output line from the PRSOV exits the HMU to pass the metered fuel to the engine burner manifold(s).

As performance demands on engines increase, the loads exerted on fuel-pressure operated auxiliary devices are also increasing. More particularly, one option for adapting fuel control systems to meet future higher load requirements is to use larger actuators and larger servo-valves to control those actuators in conjunction with a higher minimum pump pressure rise (HP-LP). However, the use of larger actuators and servo-valves may be limited by space constraints. In addition, raising the minimum pump pressure rise (HP-LP) increases heat input to the fuel and increases the risk of damage to the pump bearings, which have to run on thinner bearing film thicknesses at high pressure, low speed conditions. Thus there is a need to improve engine fuel control systems such that fuel is supplied at adequate flow rates and pressures to auxiliary devices. There is also a need to maintain or improve fuel control system efficiencies because of their impact on overall engine efficiencies.

US 2015/0192075 proposes an engine fuel control system having a main pump, a separate augmenter pump which can run at a high pressure rise, and a start valve which diverts fuel to the supply line to augment the fuel delivered thereto by the main pump at engine start up. Advantageously, by providing the augmenter pump, adequate fuel flow and pressure to auxiliary engine devices can be ensured. Moreover, by providing the start valve the size of the main pump can be reduced, providing benefits in terms of decreased main pump weight and heat rejection.

A problem can arise, however, in that actuator movements of the auxiliary engine devices can create perturbations in the delivery pressure of the augmenter pump, which translate into perturbations in flow delivered from the augmenter pump to the supply line feeding the HMU. This can results in spikes and dips in metered flow delivered to the engine, raising the risk of flameout of the combustion process and/or engine surge.

### Summary

Accordingly, a first aspect of the present invention provides an engine fuel control system including:
a fuel metering valve operable to control the flow of fuel between a supply line and a delivery line which delivers fuel to burners of the engine;
a fixed displacement main pump which receives fuel from a low pressure source and delivers the fuel at a first high pressure to the supply line;
a variable displacement augmenter pump which receives fuel from the low pressure source and delivers the fuel at a second high pressure to one or more fuel-pressure operated auxiliary engine devices, the augmenter pump having a servo-controller to vary its pump flow rate such that the fuel delivery flow rate of the augmenter pump is varied to compensate for fuel flow demands imposed by the auxiliary engine devices;
an augmentation valve which is actuated at selected engine operating conditions to open a flow path through the augmentation valve which diverts fuel delivered by the augmenter pump away from the auxiliary engine devices to the supply line to augment the fuel delivered thereto by the main pump, the augmentation valve being actuated at other engine operating conditions to shut the flow path; and
a pressure drop control valve which senses a pressure differential between the second high pressure and a reference pressure, the pressure drop control valve being arranged to control the servo-controller such that the pump flow rate of the augmenter pump is varied to maintain the pressure differential at a predetermined level, and being configured to spill, at the other engine operating conditions, a portion of the fuel delivered by the augmenter pump away from the auxiliary engine devices to the supply line to augment the fuel delivered thereto by the main pump;
wherein the engine fuel control system further includes an electrically operated control valve which is operable to actuate the augmentation valve.

Advantageously, by actuating the augmentation valve using the electrically operated control valve, the flow path which diverts fuel delivered by the augmenter pump to the supply line can be opened at all suitable engine operating conditions, i.e. not just those providing differential fuel pressures that could actuate the augmentation valve hydraulically. In particular, the flow path can be opened at engine start, take off and go-around operating conditions.

In a second aspect, the present invention provides a gas turbine engine (e.g. an aeroengine) having the engine fuel control system of the first aspect.

Optional features of the invention will now be set out. These are applicable singly or in any combination with any aspect of the invention.

At the selected engine operating conditions, the flow path may divert substantially all of the fuel delivered by the augmenter pump to the supply line.

The augmentation valve may be a binary valve having open and shut positions only.

The system may further include a control unit which determines the engine operating condition and issues a signal to the electrically operated control valve to actuate the augmentation valve to open or shut the flow path depending on the determined condition. For example, the control unit can form part of an engine electronic controller (EEC) for the engine. The electrically operated control valve can be a solenoid valve, a servo-valve or other direct actuation means, such as a linear force motor or a stepper motor.

As mentioned, the pressure drop control valve senses a pressure differential between the second high pressure and a reference pressure. For example, the pressure drop control valve may sense the pressure differential across the augmenter pump. Thus the reference pressure can be the fuel pressure of the low pressure source. Another option, however, is for the reference pressure to be the first high pressure.

The pressure drop control valve may have a fuel inlet port, a fuel outlet port and a spool whose position varies to control fuel flow through the ports and thereby provide control of the servo-controller and fuel spill to the supply line. The spool may then sense the pressure differential across the augmenter pump by having at one end a face located in a first chamber in fluid communication with fuel at the reference pressure, and at the other end a face located in a second chamber in fluid communication with the fuel at the second high pressure, wherein the outlet port is sized such that the maximum fuel spill flow rate to the supply line is no more than 30% (and preferably no more than 20% or 10%) of the maximum pumping rate of the augmenter pump. Reducing the ratio of the maximum fuel flow rate through the outlet port to the maximum pumping rate of the augmenter pump helps to further decouple communication between the pressure drop control valve and the supply line. Preferably, the first chamber is not in simultaneous fluid communication with fuel at the reference pressure and the fuel at the first high pressure. By avoiding having feeds to the first chamber from both the reference pressure and the first high pressure, the linear damping rate of the pressure drop control valve can be reduced, making the valve more responsive. When the first chamber is in fluid communication with fuel at the first high pressure, the pressure differential available for actuation of the fuel-pressure operated auxiliary engine devices can be more closely matched to the differential required to control the devices, and fuel temperature rises caused by parasitic flows can be reduced. However, with either arrangement, the spool may be spring-biased towards the second chamber. The first chamber may be in fluid communication with the low pressure source via a restriction orifice. Similarly, the first chamber may be in fluid communication with the fuel at the first high pressure via a restriction orifice.

The system may further include a differential pressure sensor which senses the differential pressure between the first high pressure and the second high pressure. The sensor can be, for example, a single transducer which measures the differential pressure directly, or two individual pressure sensors for the two pressures from whose measurements the differential pressure can be calculated. The sensed differential pressure can be used by the control unit to determine whether to actuate the augmentation valve. Additionally or alternatively, it can be used by the control unit to provide an indication of whether the augmentation valve has correctly actuated to open or shut the flow path. Additionally or alternatively, it can be used to confirm adequate fuel pressure for operation of the auxiliary engine devices.

The pressure drop control valve may be arranged to control the servo-controller such that, at the selected engine operating conditions, the pump flow rate of the augmenter pump is a constant maximum rate for a given speed. That is, when the augmentation valve opens the flow path, the servo-controller can move to fully stroke the augmenter pump, maximising its output for a given speed. In this way, the flow available to light the engine at the selected engine operating conditions can be maximised.

The amount of fuel spilled by the pressure drop control valve at the other engine operating conditions can change in inverse relation to variations in the pump flow rate of the augmenter pump. The spill flow generally changes faster than the pump delivery flow rate can change because the pressure drop control valve responds before the servo-controller, and thus the spill flow variation can act as a lead term which has an immediate effect on the fuel flow delivered to the auxiliary engine devices.

The control of the servo-controller by the pressure drop control valve may be unstable such that the servo-controller and/or the pressure drop control valve dither. Such unstable control is consistent with decreasing the degree of communication between the pressure drop control valve and the fuel metering valve, which can in turn reduce the impact of actuation of the auxiliary engine devices on fuel metering within the fuel metering valve, and vice versa.

The low pressure source may be a low pressure pump, such as a boost or lift pump.

The fixed displacement main pump may be a single gear pump or other positive displacement device. Another option, however, is for the fixed displacement main pump to be a dual gear pump, or a combination of other positive displacement devices

The one or more auxiliary engine devices can include any kind of actuator, and in particular can include any one or more of: a variable stator vane actuator, a variable inlet guide vane actuator and a bleed valve actuator.

### Brief Description of the Drawings

Embodiments of the invention will now be described by way of example with reference to the accompanying drawings in which:
Figure 1 shows a longitudinal cross-section through a ducted fan gas turbine engine;
Figure 2 shows a fuel control system for the engine of Figure 1;
Figure 3 shows detail of an actuator pump unit of the fuel control system of Figure 1;
Figure 4 shows detail of a variant actuator pump unit;
Figure 5 shows detail of a further variant actuator pump unit; and
Figure 6 shows a close-up view of a variant flow washed filter.

### Detailed Description and Further Optional Features

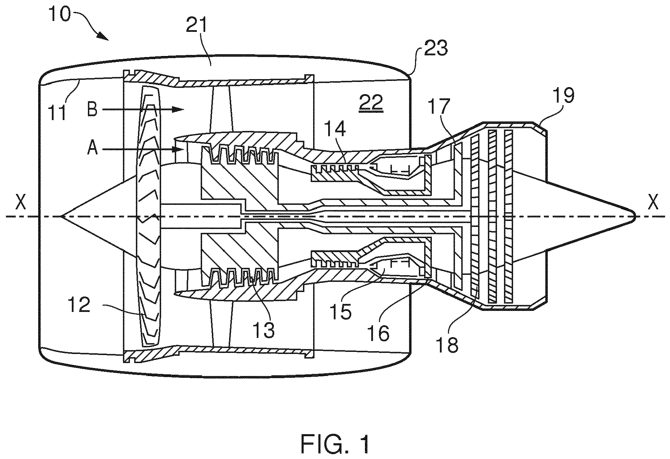

With reference to Figure 1, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

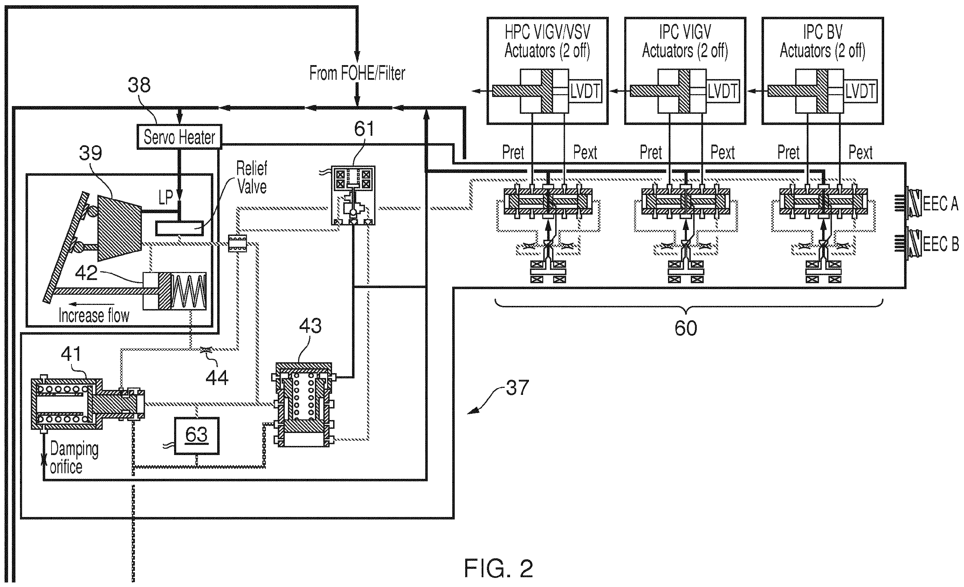

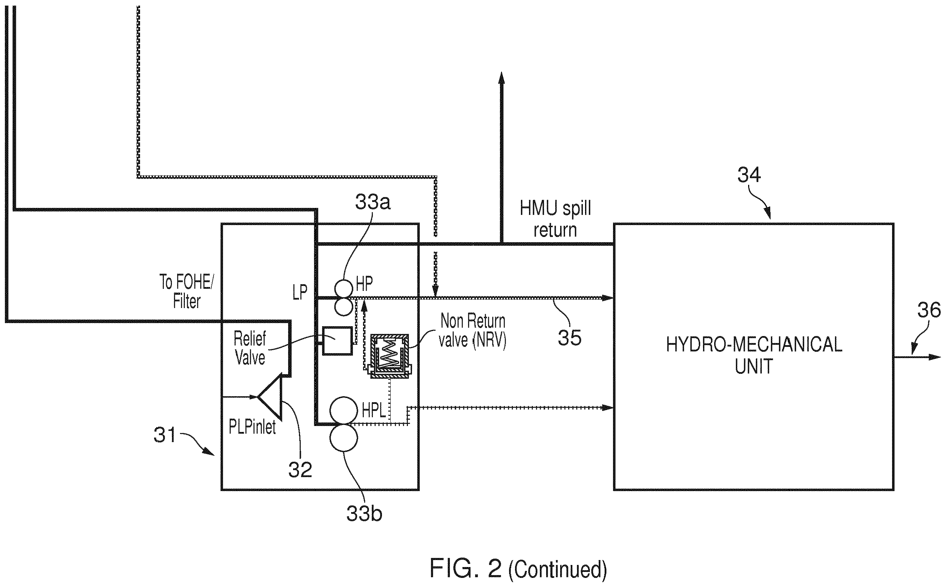

A fuel control system of the engine, which is illustrated diagrammatically in Figure 2, is under the control of the engine's EEC, and has a main pump unit 31 comprising a low pressure (LP) pump 32 which draws fuel from a fuel tank of the aircraft at pressure PLPinlet and supplies the fuel at boosted pressure LP to the inlet of a high pressure (HP) fixed displacement pump. The LP pump 32 typically comprises a centrifugal impeller pump while the HP pump may comprise one or more twin pinion gear pumps. As illustrated, the HP pump comprises a small gear pump 33a providing fuel at pressure HP and a large gear pump 33b providing fuel at pressure HPL which combines with the fuel at pressure HP via a non-return valve.

The LP pump 32 and the HP pump 33a, b are typically connected to a common drive input, which is driven by the engine HP shaft via an engine accessory gearbox. The inter-stage flow between the LP and HP pumping stages is typically used to cool engine lubrication oil in a fuel/oil heat exchanger (FOHE - not shown).

Not all the fuel exiting the HP pump 33a, b may be burnt in the engine. A substantial proportion may be recirculated back to the pump unit 31 via a spill return of the hydro-mechanical unit 34 (described below). For example, when the engine is operating at altitude where the engine burns little fuel, there may be significant fuel recirculation, raising the temperature of the fuel in the pumping system.

A hydro-mechanical unit (HMU) 34 of the fuel control system for the engine is also illustrated diagrammatically in Figure 2. The HP pump 33a, b feeds HP fuel to a supply line 35 which extends to a fuel metering valve (not shown) of the HMU, the metering valve being operable by the EEC to control the rate at which fuel is allowed to flow from the supply line 35 via a pressure raising and shut-off valve (not shown) of the HMU to a delivery line 36 and thence to burners of the engine. Servo-valve offtake flows (not shown) may be taken via a flow washed filter (not shown) which can be provided on the supply line 35. The HP pump 33 has a relief valve which prevents excess pressure build up in the supply line 35 in the event of a downstream blockage e.g. caused by coking of fuel in the engine fuel manifold.

The fuel control system also has an actuator pump unit 37 which receives a portion of the LP fuel from the FOHE mixed with fuel from the spill return of the HMU 34. The fuel enters the actuator pump unit 37 via an optional servo heater 38.

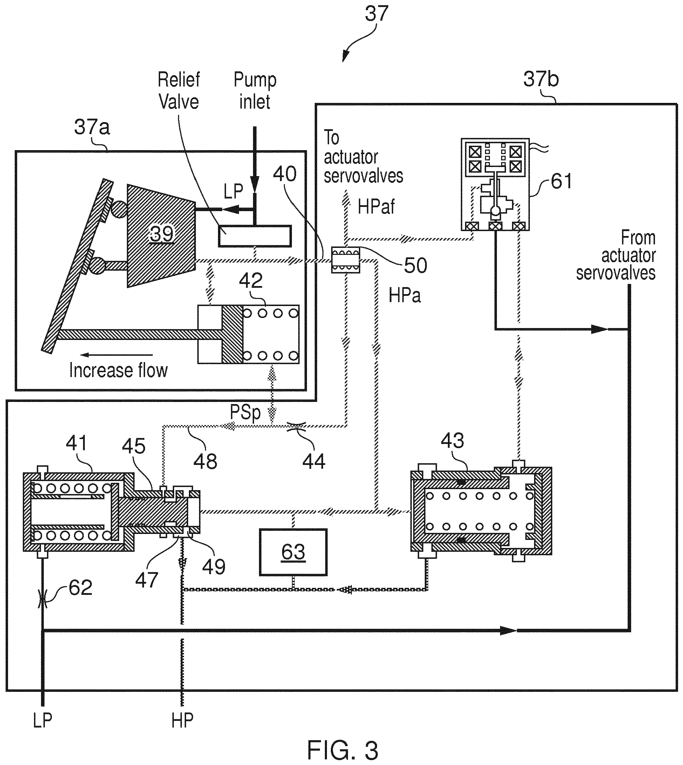

The actuator pump unit 37 is shown in more detail in Figure 3. It has a pump sub-unit 37a which contains a variable displacement (e.g. axial piston) augmenter pump 39 for pressurising the LP fuel entering the unit 37 to a high pressure HPa. The pressurised fuel is filtered via a flow washed filter 50, and delivered at a pressure HPaf to fuel-pressure operated auxiliary engine devices, such as actuator servo-valves 60 for variable stator vanes (VSVs), variable inlet guide vanes (VIGVs) and bleed valves (BVs). Thereafter the fuel is sent to the HMU spill return. The variable displacement augmenter pump (VDP) 39 also has a relief valve which prevents excess pressure build up in the line 40 supplied by the VDP with fuel at pressure HPa in the event of a downstream blockage.

The actuator pump unit 37 also has a control sub-unit 37b, which may be physically separate from or combined with the pump sub-unit 37a. The sub-unit 37b contains a pressure drop control valve (PDCV) 41 which senses the pressure differential (HPa-LP) across the VDP 39 and is arranged to control a servo-controller 42 of the VDP 39 such that the pump flow rate of the VDP is varied to maintain the pressure differential at a predetermined level. For example, the servo-controller may have a piston and cylinder arrangement, with the position of the piston in the cylinder changing the angle of a swash plate of the VDP 39 to vary the pump flow rate. A biasing spring in the cylinder biases the piston to a position which increases the pumped flow rate. To a first side of the piston, the cylinder is at the delivery pressure HPa of the VDP 39. To the second side of the piston, the cylinder is in fluid communication with fuel at pressure PSp, which in turn is in communication with HPa via servo orifice 44 and flow washed filter 50. The cylinder to the second side of the piston is also in fluid communication with a pressure drop control orifice (PDO) 45 of the PDCV 41 via a connection line 48. The pressure PSp in the cylinder to the second side of the piston is thus determined by HPaf and the state of the PDO 45, which is in turn determined by the sensed pressure differential (HPa-LP) of the PDCV 41. When the PDO 45 is closed, the pressure PSp rises to HPaf. When the PDO 45 is open (shown in Figure 3), the pressure PSp drops towards HP. Decreasing HPa-PSp causes the VDP 39 to increase its pumped flow rate, while increasing HPa-PSp causes the VDP 39 to decrease its pumped flow rate.

The actuator pump unit 37 allows the VDP 39 to combine with the HP pump 33 to deliver fuel to the metering valve supply line 35. In particular, an augmentation valve 43 is connected to the HPa fuel line from the VDP 39. The augmentation valve is under the control of an electrically operated solenoid control valve 61, which in turn is controlled by the EEC. The augmentation valve is a binary valve which can be actuated to open a low resistance flow path through the valve which diverts substantially all the fuel delivered by the VDP 39 away from the auxiliary engine devices 60 to the supply line 35.

The augmentation valve 43 is operated differently for "selected" engine operating conditions, such as engine start, take-off and go-around, than for "other" engine operating conditions, such as idle and cruise.

At the other operating conditions the EEC signals the solenoid control valve 61 to actuate the augmentation valve 43 to shut the diversion flow path through the augmentation valve (illustrated in Figure 3).

Under these other conditions, the PDCV 41 senses the VDP 39 pressure rise (HPa-LP) and sets it to a predetermined level (e.g. 1000 psid (6.9 MPa)) required for actuation control. HPa-PSp is substantially constant, set by the sizing of the piston of the servo-controller 42 and its associated spring. If an engine demand increases flow to the actuator servo-valves 60, HPa-LP falls, causing the spool of the PDCV 41 to move (rightwards) to close the PDO 45. As a result, flow into the cylinder of the servo-controller 42 via the servo orifice 44 exceeds the flow exiting the cylinder via the PDO 45, displacing the piston in the servo-controller 42 to upstroke the VDP 39 until HPa-LP is restored to the predetermined level. However, if the actuators require less flow, HPa-LP increases to open the PDO 45, resulting in a spill of fuel from the connection line 48 through the PDO 45 and a large port 47 of the PDCV 41 to the HP pump 33 outlet. This results in the flow leaving the cylinder of the servo-controller 42 via the PDO 45 exceeding the flow entering the cylinder via the servo orifice 44, displacing the piston in the servo controller 42 to de-stroke the VDP 39 and restore HPa-LP.

The PDCV 41 includes a spill port 49 which connects the VDP delivery at pressure HPa to the HP pump outlet at pressure HP. This arrangement provides rapid transient response. In particular, if the servo-valves 60 require more actuation flow, as soon as the PDCV 41 moves to close the PDO 45, the amount of spill flow through the spill port 49 is reduced and this is immediately available to drive the servo-valves 60 before the VDP 39 has had time to upstroke. Conversely, if the servo-valves 60 require less actuation flow, as soon as the PDCV 41 moves to open the PDO 45, the amount of spill flow through the spill port 49 is increased before the VDP 39 has had time to downstroke. Thus the spill flow from the VDP 39 delivery through the spill port 49 acts as a lead term, which is also supplemented by the flow displaced by the valve piston of the PDCV 41 as it moves.

When the EEC determines that the engine is at a selected low fuel flow operating condition such as engine start, or a selected high flow operating condition, such as take-off or go-around, it signals the solenoid control valve 61 to actuate the augmentation valve 43 to open the flow path through the augmentation valve, diverting substantially all the fuel delivered by the VDP 39 away from the auxiliary engine devices 60 to the supply line 35.

Under a selected low fuel flow start operating condition, the VDP pressure rise (HPa-LP) is low (for example much less than 1000 psid (6.9 MPa)), causing the spool of the PDCV 41 to fully close the PDO 45 (by movement of the spool to the right). As a result no flow leaves the cylinder of the pump servo-controller 42 via the PDO 45, HPa-PSp falls to a low value, and the piston of the servo-controller fully strokes the VDP 39 maximising its pumped flow rate.

Similarly, under a selected high fuel flow operating condition, the pressure raising and shut-off valve in the HMU reaches its maximum stop and the fuel pressure HP in the supply line 35 increases significantly. The pressure drop available to de-stroke the pump via the servo-controller 42 is HPa-HP. As burner flow increases towards take off levels, this pressure drop progressively decreases and consequently, the capability to de-stroke the VDP 39 decreases. Once HP approaches HPa and exceeds PSp, flow enters the cylinder of the pump servo-controller 42 via both the servo orifice 44 and the PDO 45, displacing the piston of the servo-controller 42 to again fully stroke the VDP 39.

Thus, at selected fuel flow operating conditions the VDP 39 can be fully stroked, operating like a fixed displacement pump. The augmentation valve 43, actuated by the solenoid control valve 61, opens a flow path that allows almost all the VDP 39 delivery flow (except for leakage to the servo-valves 60) to pass to the fuel metering valve supply line 35 at HP, augmenting the flow from the HP pump 33 and thereby reducing the size of the flow required from this pump. A further advantage of this arrangement is that it allows the VDP 39 to be de-pressurised at start, which reduces bearing wear in the VDP (e.g. in the cylinders and at the swash plate) and as a result reduces leakages.

In addition, the PDCV 41 can be a direct acting valve with no feed to the spring chamber from the VDP delivery pressure HPaf. This reduces significantly the linear damping rate of the PDCV to enable it to be more dynamic.

Dynamic capability can also be improved by elevating the gain of the closed loop pressure control of the VDP 39 beyond the stability margin, making the system fundamentally unstable (e.g. so that it oscillates continuously at its natural frequency) but very responsive. In particular, the steady state flow from HPa to HP through the spill port 49 of the PDCV 41 can been reduced as part of the gain increase and also to reduce the communication between the actuator movements of the servo-valves 60 and the fuel metering valve. For example, the spill port 49 can be sized so that the maximum fuel flow rate through the port is no more than 30% of the maximum pumping rate of the VDP 39. The magnitude of resultant oscillations in pressure and flow caused by the unstable regulation system can then be tuned by the volume of fuel between the VDP 39 and the servo-valves 60. For example, typical PDCV oscillations in the unstable regime may have amplitudes of less than 0.25 mm (preferably less than 0.1 mm). These oscillations can be decoupled from components of the VDP 39 by increasing the volume of HPa fuel in the line 40 such that VDP component oscillations of less than 0.03 mm are achievable. Reducing the communication between the actuator movements of the servo-valves 60 and the fuel metering valve can in turn reduce the impact of actuator modulation on burnt flow and vice versa.

Other possible adjustments that can made to increase the gain include: increasing the area of the piston of the PDCV 41, reducing the spring rate of the PDCV 41, and increasing the rate of change in area of the orifice 45 for a given change in PDCV piston position.

A non-linear damper 62 (i.e. a restriction orifice) connecting the spring chamber of the PDCV 41 to LP can also be used to modulate the amplitude of resultant oscillations.

A differential pressure transducer (DPT) 63 may be used to sense the difference between the VDP outlet pressure HPa and the HP pump outlet pressure HP to provide information for the EEC logic to determine whether to switch the augmentation valve 43 and to provide an indication that the augmentation valve 43 has switched.

The DPT 63 can also provide information on the relative health of the actuation and metering processes such that a significant failure in the actuation system can be identified. Identification of the position of the augmentation valve 43 is beneficial in that it provides confirmation that the flow from the VDP 39 is available for augmentation of the main HP 33a, b, and thus engine start capability is confirmed as well as the capability to deliver the maximum burnt flows for take-off. The differential pressure signal drops to a low level when the augmentation valve is actuated to open the low resistance, diversion flow path from the VDP outlet to HP. Failure of the augmentation valve to open results in the differential pressure being higher than expected. The differential pressure signal can also identify when the actuation system pressure falls to a low level relative to HP, which may be caused by a failure of the augmentation valve to open or another failure in the actuator control that causes a loss of delivery pressure. In such circumstances the signal can be of use in identifying a system error and the need for subsequent action to ensure safe operation of the engine.

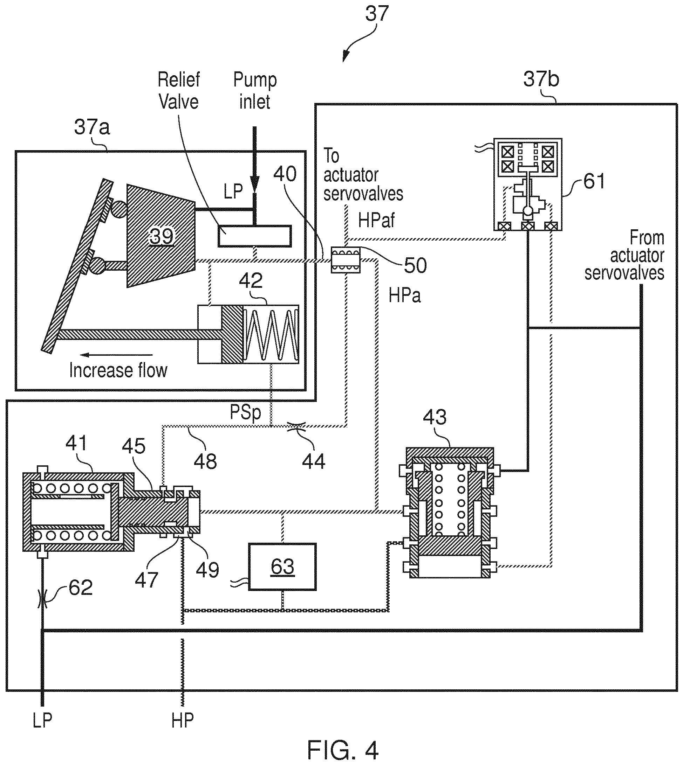

In a variant example of the actuator pump unit, the operation of the augmentation valve 43 can be confirmed with a dedicated position sensor. As another variant example of the actuator pump unit, the augmentation valve 43 can have LP and HPa chambers at respective sides of its piston, and thus be configured to operate under the control of the solenoid control valve 61 on the basis of a differential pressure, as shown in Figure 4. As another variant example of the actuator pump unit, the solenoid control valve 61 could be replaced by a different type of electrically operated control valve, such as a servo-valve or another direct actuation means.

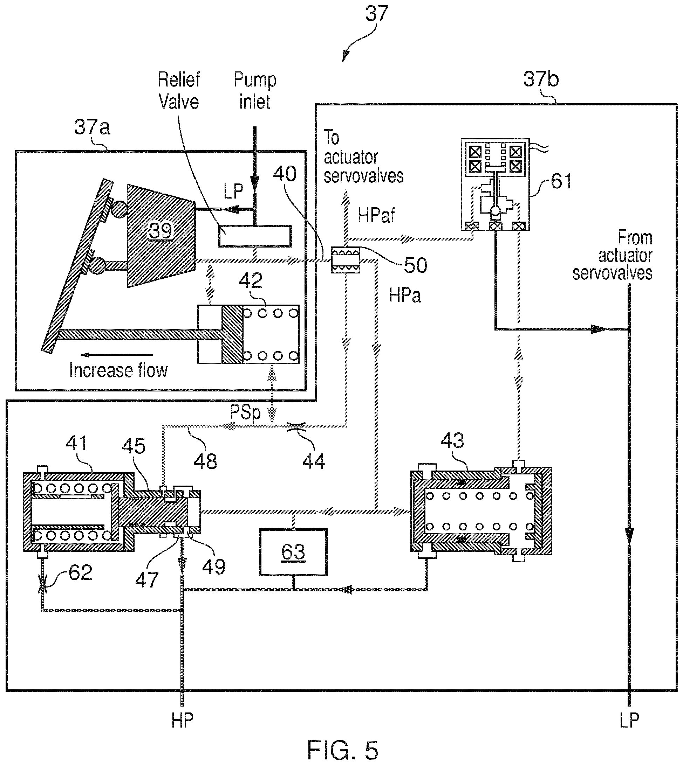

Figure 5 shows yet another variant of the actuator pump unit 37. In this variant, the routing of fluid paths within the control sub-unit 37b are changed to direct fuel at the pressure HP of supply line 35 into the spring chamber of the PDCV 41 via the non-linear damper 62, rather than pressure LP. External connections to the actuator pump unit remain unchanged.

Connecting the spring chamber of the PDCV 41 to HP means that the outlet pressure HPa from the variable displacement augmenter pump 39 is regulated relative to HP pressure rather than LP pressure. That is, the PDCV senses the pressure differential (HPa-HP) rather than the pressure differential (HPa-LP) across the augmenter pump. However, the servo mechanism used to effect a change in the swash of the augmenter pump, via the PDCV, can remain unchanged.

With the PDCV 41 sensing the pressure differential (HPa-HP), the steady state servo differential for actuation becomes a function of the steady state burn flow, since pressure HP is a function of burn flow and pressure HPa is a now function of pressure HP. Higher engine powers require higher burn flows and result in higher actuation loads. In this way, the pressure differential at the actuator servo-valves 60 produced by the fuel control system can be a closer match to the differential required to control engine actuator position for the predicted actuation loading.

A benefit of this change is that the pressure differential provided for actuation of engine functions can be significantly reduced at low burn flow conditions, since pressure HP is low at low burn flows. This reduces the rise in fuel temperature produced as a result of recirculating fuel within the system, i.e. parasitic flows required for functioning of the actuator servo-valves 60 and the spill flow through the connection line 48 through the PDO 45 required to give rapid dynamic control of the outlet pressure HPa of the augmenter pump.

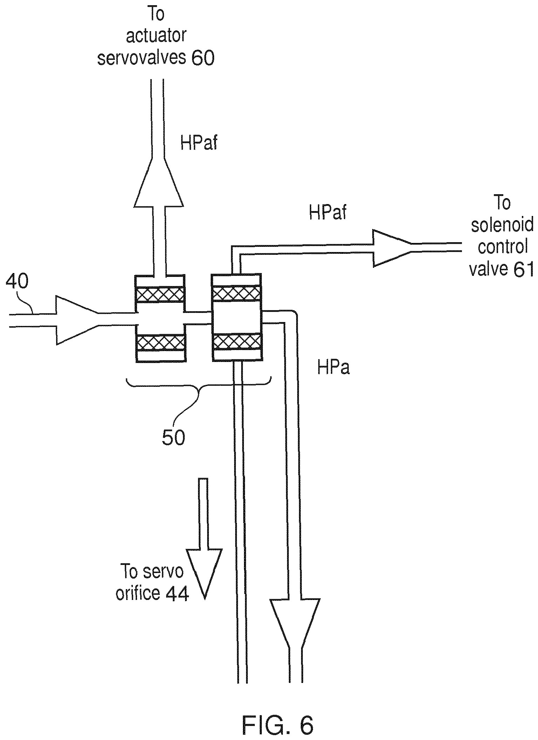

In Figures 2 to 5 discussed above, the flow washed filter 50 is shown as a single component. However, an option that is applicable to all variants of the actuator pump unit 37 is to split the flow washed filter into two components, as shown in the close-up view of Figure 6. With this change, a risk that the augmentation valve 43 might inadvertently open when large flows are drawn through the filter by the actuator servo-valves 60 can be reduced.

More generally, the architecture of the fuel control system shown in Figures 2 to 6 is suitable for a large civil aeroengine, but other architectures may be appropriate for different types of engine.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An engine fuel control system including:
a fuel metering valve operable to control the flow of fuel between a supply line (35) and a delivery line (36) which delivers fuel to burners of the engine;
a fixed displacement main pump (33a, b) which receives fuel from a low pressure (LP) source (32) and delivers the fuel at a first high pressure (HP) to the supply line;
a variable displacement augmenter pump (39) which receives fuel from the low pressure source and delivers the fuel at a second high pressure (HPa) to one or more fuel-pressure operated auxiliary engine devices (60), the augmenter pump having a servo-controller (42) to vary its pump flow rate such that the fuel delivery flow rate of the augmenter pump is varied to compensate for fuel flow demands imposed by the auxiliary engine devices;
an augmentation valve (43) which is actuated at selected engine operating conditions to open a flow path through the augmentation valve which diverts fuel delivered by the augmenter pump away from the auxiliary engine devices to the supply line to augment the fuel delivered thereto by the main pump, the augmentation valve being actuated at other engine operating conditions to shut the flow path; and
a pressure drop control valve (41) which senses a pressure differential between the second high pressure and a reference pressure, the pressure drop control valve being arranged to control the servo-controller such that the pump flow rate of the augmenter pump is varied to maintain the pressure differential at a predetermined level, and being configured to spill, at the other engine operating conditions, a portion of the fuel delivered by the augmenter pump away from the auxiliary engine devices to the supply line to augment the fuel delivered thereto by the main pump;
wherein the engine fuel control system further includes an electrically operated control valve which is operable to actuate the augmentation valve.

2. An engine fuel control system according to claim 1, further including a control unit which determines the engine operating condition and issues a signal to the electrically operated control valve to actuate the augmentation valve to open or shut the flow path depending on the determined condition.

3. An engine fuel control system according to claim 1 or 2, wherein the reference pressure is the fuel pressure (LP) of the low pressure source or the reference pressure is the first high pressure.

4. An engine fuel control system according to any one of the previous claims, wherein the pressure drop control valve has a fuel inlet port, a fuel outlet port and a spool whose position varies to control fuel flow through the ports and thereby provide control of the servo-controller and fuel spill to the supply line, the spool sensing the pressure differential across the augmenter pump by having at one end a face located in a first chamber in fluid communication with fuel at the reference pressure and at the other end a face located in a second chamber in fluid communication with the fuel at the second high pressure, wherein the outlet port (49) is sized such that the maximum fuel spill flow rate to the supply line is no more than 30% of the maximum pumping rate of the augmenter pump.

5. An engine fuel control system according to claim 4, wherein the spool is spring-biased towards the second chamber.

6. An engine fuel control system according to any one of the previous claims, further including a differential pressure sensor (63) which senses the differential pressure between the first high pressure and the second high pressure.

7. An engine fuel control system according to any one of the previous claims, wherein the pressure drop control valve is arranged to control the servo-controller such that, at the selected engine operating conditions, the pump flow rate of the augmenter pump is a constant maximum rate for a given speed.

8. An engine fuel control system according to any one of the previous claims, wherein the amount of fuel spilled by the pressure drop control valve at the other engine operating conditions changes in inverse relation to variations in the pump flow rate of the augmenter pump.

9. An engine fuel control system according to any one of the previous claims, wherein at the selected engine operating conditions the flow path diverts substantially all of the fuel delivered by the augmenter pump to the supply line.

10. An engine fuel control system according to any one of the previous claims, wherein the control of the servo-controller by the pressure drop control valve is unstable such that the servo-controller and/or the pressure drop control valve dither.

11. An engine fuel control system according to any one of the previous claims, wherein the low pressure source is a low pressure pump.

12. An engine fuel control system according to any one of the previous claims, wherein the fixed displacement main pump is a single gear pump.

13. An engine fuel control system according to any one of claims 1 to 11, wherein the fixed displacement main pump is a dual gear pump.

14. An engine fuel control system according to any one of the previous claims, wherein the one or more auxiliary engine devices include any one or more of: a variable stator vane actuator, a variable inlet guide vane actuator and a bleed valve actuator.

15. A gas turbine engine (10) having the engine fuel control system according to any one of the previous claims.
